# EUROPÄISCHE PATENTANMELDUNG

(11) **EP 3 498 379 A2**
(43) Veröffentlichungstag der Anmeldung: **19.06.2019**
(21) Anmeldenummer: 18206467.5
(22) Anmeldetag: 15.11.2018
(51) Int. Cl.: B03B 9/06, B03B 5/62, B07B 1/00

(54) **GRANULATBEHANDLUNGSVORRICHTUNG UND VERFAHREN ZUM BETREIBEN EINER GRANULATBEHANDLUNGSVORRICHTUNG**

(30) Priorität: 18.12.2017 DE 102017130315
(71) Anmelder: EnBW Energie Baden-Württemberg AG, 76131 Karlsruhe (DE)
(72) Erfinder: Turek, Herr Rudolf, 76185 Karlsruhe (DE)
(74) Vertreter: RPK Patentanwälte Reinhardt, Pohlmann und Kaufmann Partnerschaft mbB

(57) **Zusammenfassung**

Die Erfindung betrifft eine mehrstufige Granulatbehandlungsvorrichtung (500) zur Behandlung insbesondere von Granulat aus Glas und/oder aus Keramik, umfassend eine erste Trennstufe (30) zur Abtrennung und/oder zum Aufbrechen wenigstens eines Teils von an Partikeln des Granulats anhaftenden Verunreinigungen, insbesondere organischen und/oder metallischen Verunreinigungen, eine in Prozessrichtung (99) folgende zweite Trennstufe (50) zur wenigstens überwiegenden Trennung des in der ersten Trennstufe (30) behandelten Granulats von den in der ersten Trennstufe (30) abgetrennten Verunreinigungen, sowie eine in Prozessrichtung (99) auf die zweite Trennstufe (50) folgende dritte Trennstufe (70) zur wenigstens teilweisen Entfernung von Flüssigkeit des in der zweiten Trennstufe (50) gereinigten Granulats.

## Beschreibung

### Stand der Technik

Die Erfindung betrifft eine Granulatbehandlungsvorrichtung und ein Verfahren zum Betreiben einer Granulatbehandlungsvorrichtung.

Zur Vermeidung von Abfällen wird gebrauchtes Glas (Altglas), das üblicherweise als Lebensmittelverpackung anfällt, in Glascontainern gesammelt und ein großer Teil zur stofflichen Wiederverwertung eingeschmolzen. Hierzu wird das Altglas nach Farben sortiert, wobei in Deutschland typischerweise zwischen Weißglas, Grünglas und Braunglas unterschieden wird. Das Glas wird gebrochen und Metallteile mittels Magnetscheidern und Wirbelstromscheidern abgetrennt. Größere Fremdstoffe werden per Hand entfernt. Das Altglas wird auf kleine Korngrößen um 15 mm oder weniger gebrochen und gesiebt. Auch können lichtundurchlässige Fremdstoffe wie Steine, Keramik, Porzellan (SKP) mittels optischer Verfahren entfernt werden. Restliche eisenhaltige Stoffe werden wiederum mittels Magnetscheidern entfernt. Das so gereinigte Altglas kann der stofflichen Wiederverwertung zugeführt werden.

Allerdings können die glashaltigen Reste, die bei der Aufarbeitung des Altglases entstehen, nicht wiederverwertet werden. Diese fallen am Ende der Aufarbeitung als abrasives, feinkörniges Granulat an, welches hohe Anteile an organischen Stoffen enthält, wie z.B. Leim und Papierreste. Wegen der organischen Störstoffe kann das Granulat nicht auf Deponien gelagert werden, sondern muss bei Glasherstellern in stetig wachsender Menge gelagert werden.

Ähnliche Probleme sind auch bei der Aufarbeitung von keramischen Stoffen bekannt, wobei dort ebenso neben den hohen Anteilen an organischen Störstoffen der abrasive Charakter des Granulats problematisch ist.

Beispielsweise zeigt die FR 2595273 A1 eine Vorrichtung zur Reinigung von verunreinigtem grobem Glasbruch, bei der wasserlösliche Bestandteile in mehreren aufeinander folgenden Trennstufen abgelöst werden. Der Glasbruch enthält dabei auch feste Fremdbestandteile wie Metallkapseln, Metalldeckel Plastikteile, Draht, Korken etc. Eine begrenzte Menge an Glasbruch wird über eine Vorrichtung in einen wassergefüllten Tank zugeführt und dort über eine bestimmte Zeit dem Wasser ausgesetzt, wobei sich wasserlösliche Anhaftungen, wie Klebstoffreste, Papierschnipsel, vom Glasbruch und den darin enthaltenen festen weiteren Bestandteilen, wie Metallkapseln, Metalldeckel, Plastikteile, Draht, Korken etc., ablösen, die an die Oberfläche schwimmen können und abgeführt werden.

Über eine Ansaugung wird der grobe Glasbruch mit den festen Bestandteilen aus dem unteren Bereich des Tanks zum weiteren Ablösen von Kleberesten und dergleichen in eine Trommelvorrichtung und von dort über ein Schüttelsieb geleitet. Feinkörniger Schlamm wird aus dem unteren Bereich des Tanks in einen Sammelbehälter abgeführt. Am Ausgang der Vorrichtung nach den Trennstufen liegen Glasbruch und die im Glasbruch enthaltenen festen Bestandteile in gereinigter Form vor und können später voneinander getrennt werden. Um die Vorrichtung kontinuierlich betreiben zu können, wird vorgeschlagen, mehrere derartige Tanks parallel zu betreiben.

### Offenbarung der Erfindung

Die Aufgabe der Erfindung ist, eine ökonomisch vorteilhafte Granulatbehandlungsvorrichtung anzugeben, die eine bessere Wiederverwendung von feinkörnigem, insbesondere abrasivem, Granulat, insbesondere aus Glas und/oder Keramik, erlaubt.

Eine weitere Aufgabe besteht darin, ein Verfahren zum Betreiben einer Granulatbehandlungsvorrichtung anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird nach einem ersten Aspekt der Erfindung eine mehrstufige Granulatbehandlungsvorrichtung zur Behandlung insbesondere von Granulat aus Glas und/oder aus Keramik vorgeschlagen. Die Granulatbehandlungsvorrichtung umfasst eine erste Trennstufe zur Abtrennung und/oder zum Aufbrechen wenigstens eines Teils von an Partikeln des Granulats anhaftenden Verunreinigungen, insbesondere organischen und/oder metallischen Verunreinigungen, eine in Prozessrichtung folgende zweite Trennstufe zur wenigstens überwiegenden Trennung des in der ersten Trennstufe behandelten Granulats von den in der ersten Trennstufe abgetrennten Verunreinigungen, sowie eine in Prozessrichtung auf die zweite Trennstufe folgende dritte Trennstufe zur wenigstens teilweisen Entfernung von Flüssigkeit des in der zweiten Trennstufe gereinigten Granulats.

Als Prozessrichtung wird die Richtung verstanden, in der das zu behandelnde Granulat von Trennstufe zu Trennstufe durch die Vorrichtung bewegt wird. Vorteilhaft kann die Behandlung des Granulats kontinuierlich erfolgen.

Vorteilhaft kann ein hoher Anteil des Granulats von den anhaftenden Verunreinigungen befreit werden und einer Wiederverwertung zugeführt werden. Bei Altglas gelingt durch die Verwertung des übriggebliebenen Granulats eine Erhöhung der Ausbeute bei der Glaswiederaufarbeitung. Insbesondere kann in der ersten Trennstufe ein Aufbrechen von Agglomeraten erfolgen, so dass eine Trennung von Granulat und Fremdstoffen erleichtert wird.

Das Granulat kann ein feinkörniges Granulat sein, wobei die Korngrößen vorzugsweise weniger als 2 cm, besonders bevorzugt weniger als 1,5 cm, besonders bevorzugt wenige Millimeter, betragen. Die Partikeln des Granulats müssen nicht zwangsläufig rund sein; vorzugsweise kann die maximale Abmessung in einer Dimension einer mittleren Korngröße des Granulats höchstens 2 cm, bevorzugt wenige Millimeter, groß sein.

Im Stand der Technik kann derartig feinkörniges Material nicht weiter behandelt werden. So wird in der FR 2595273 A1 beschrieben, dass am Ausgang der Vorrichtung gereinigter Glasbruch und gereinigte feste Fremdkörper vorliegen, die erst in weiteren Schritten noch voneinander getrennt werden müssen.

Vorzugsweise kann die Granulatbehandlungsvorrichtung für abrasives Granulat, vorzugsweise Glas, insbesondere Glasverpackungen, und/oder Keramik, wie Irdengut, Steingut, Steinzeug, Porzellan, eingesetzt werden.

Nach einer günstigen Ausgestaltung kann in Prozessrichtung gesehen vor der ersten Trennstufe eine Förderstufe angeordnet sein, die zum Fördern des in der ersten Trennstufe zu behandelnden Granulats zur ersten Trennstufe vorgesehen ist. Die Förderstufe kann vorteilhaft mit einem Frequenzumrichter ausgestattet sein, um eine Fördermenge des Granulats in die erste Trennstufe bedarfsgerecht einzustellen. Insbesondere kann eine kontinuierliche Prozessführung ermöglicht werden. Die Förderstufe kann beispielsweise als Tragkettenförderer oder Wellkantengurtförderer ausgebildet sein. Die Förderstufe kann eine Einfüllanordnung aufweisen, die vorzugsweise als Einfülltrichter ausgebildet sein kann. Dies erleichtert die Bedienung der Granulatbehandlungsvorrichtung.

Nach einer günstigen Ausgestaltung kann die erste Trennstufe, insbesondere zum Aufbrechen von Agglomeraten aus Granulat und daran anhaftenden Anhaftungen wie Fremdkörper und/oder Fremdstoffe, wenigstens ein Rührwerk aufweisen und abhängig von einem Drehmoment und/oder einer Stromaufnahme des Rührwerks betreibbar sein. In der ersten Trennstufe wird vorzugsweise eine Reinigungsflüssigkeit zugefügt. Beispielsweise kann Wasser zugegeben werden, wenn das Granulat zu viskos ist, bis eine gewünschte Obergrenze des Feststoffgehalts im Granulat erreicht ist. Die darauffolgenden Behandlungsschritte werden leichter steuerbar.

Nach einer günstigen Ausgestaltung kann die zweite Trennstufe abhängig von einem Materialstrom an Granulat in die zweite Trennstufe betreibbar sein. Alternativ oder zusätzlich kann die zweite Trennstufe abhängig von einer Strömungsgeschwindigkeit der Flüssigkeit in der zweiten Trennstufe betreibbar sein. Unabhängig vom Ausgangszustand des rohen Granulats kann dieses in einen fließfähigen Zustand überführt werden, der vorzugsweise einen definierten maximalen Feststoffgehalt aufweisen kann.

Nach einer günstigen Ausgestaltung kann die dritte Trennstufe wenigstens abhängig von einem Materialvorschub an Granulat von der zweiten zur dritten Trennstufe betreibbar sein. Alternativ oder zusätzlich kann die dritte Trennstufe abhängig von einer Strömungsgeschwindigkeit und/oder Menge und/oder eines Drucks einer Flüssigkeit in der zweiten und/oder dritten Trennstufe betreibbar sein. Alternativ oder zusätzlich kann die dritte Trennstufe abhängig von einer Amplitude und/oder einer Frequenz einer Siebeinrichtung in der dritten Trennstufe betreibbar sein. Vorteilhaft kann ein kontinuierlicher Betrieb der Granulatbehandlungsvorrichtung verbessert werden, indem die einzelnen Komponenten in ihrem Durchsatz aufeinander abgestimmt sind.

Nach einer günstigen Ausgestaltung kann eine Zufuhreinrichtung vorgesehen sein, mit der Flüssigkeit, insbesondere Wasser, in die erste Trennstufe zuführbar ist und ein pumpfähiges Granulat-Flüssigkeitsgemisch, insbesondere mit einer definierten Obergrenze an Feststoffgehalt, herstellbar ist. Die Zufuhreinrichtung kann für weitere der Trennstufen genutzt werden.

Nach einer günstigen Ausgestaltung kann die erste Trennstufe eine Einrichtung zur nassmechanischen Behandlung des Granulats, insbesondere eine Attritionszelle, umfassen. Eine Attritionszelle erlaubt einen hohen Energieeintrag in das verunreinigte Granulat, so dass an den Partikeln anhaftende Verunreinigungen zuverlässig abgelöst werden können. Selbst wenn das unbehandelte Granulat stark agglomeriert vorliegt, können die Agglomerate in der Attritionszelle leicht aufgebrochen werden. In der ersten Trennstufe wird ein Granulat/Flüssigkeitsgemisch gebildet, in dem neben den Granulatpartikeln und der Flüssigkeit auch die abgelösten Verunreinigungen enthalten sind. Das so behandelte Granulat wird in entsprechend der Prozessrichtung in die zweite Trennstufe geleitet.

Nach einer günstigen Ausgestaltung kann die zweite Trennstufe einen Aufstromklassierer umfassen. Aufstromklassierer sind an sich bekannt. Günstigerweise kann ein Ausgang der zweiten Trennstufe für das gereinigte Granulat oberhalb eines Eingangs der dritten Trennstufe angeordnet sein. Diese Anordnung ermöglicht einen Transport des in der zweiten Trennstufe behandelten Granulats in die dritte Trennstufe mit der Schwerkraft.

In der ersten Trennstufe behandeltes Granulat kann im Aufstromklassierer im Gegenstrom der Flüssigkeit von den im behandelten Granulat enthaltenen abgelösten Anhaftungen befreit werden. Dazu kann das Granulat von oben und Flüssigkeit, z.B. Wasser, von unten in den Aufstromklassierer eingeführt werden. Bei Glasgranulat kann so der mitgeführte Papierschlamm von den Glaspartikeln getrennt und beispielsweise nach oben im Aufstromklassierer getragen werden, während das Glasgranulat absinkt und sich im unteren Bereich ansammelt und von dort ausgetragen werden kann. Der Grad der Trennung von Verunreinigungen und Granulat kann über die Strömungsgeschwindigkeit der Flüssigkeit im Aufstromklassierer beeinflusst werden.

Nach einer günstigen Ausgestaltung kann die dritte Trennstufe eine Siebeinrichtung, insbesondere ein Schwingsieb, umfassen. Die Reinigungsleistung des Schwingsiebs der dritten Trennstufe kann hauptsächlich über die Parameter Vorschub, Schichtdicke des Granulatstroms, Amplitude des Schwingsiebs, Frequenz des Schwingsiebs, die Menge der zugeführten Flüssigkeit sowie den Druck der zugeführten Flüssigkeit beeinflusst werden. Zum Antrieb des Schwingsiebs ist ein regelbarer Motor zweckmäßig.

Nach einer günstigen Ausgestaltung kann eine Steuer- und/oder Regeleinheit zum Betreiben von einer oder mehreren der Trennstufen und/oder einer stromauf der ersten Trennstufe angeordneten Förderstufe vorgesehen sein. Der Betrieb der Granulatbehandlungsvorrichtung wird vereinfacht, und die Trennstufen können leichter aufeinander abgestimmt werden.

Nach einer günstigen Ausgestaltung können zur Aufnahme wenigstens der Trennstufen mehrere Module vorgesehen sein. Insbesondere kann eine der ersten Trennstufe stromauf vorgelagerte Förderstufe und die erste Trennstufe in einem Modul angeordnet sein, das vorzugsweise für den Straßentransport ausgebildet sein kann, insbesondere als Transportcontainer oder Ladeplattform. Die Granulatbehandlungsvorrichtung kann mobil an verschiedenen Einsatzorten eingesetzt werden, so dass vor Ort Kosten und Platz für eine stationäre Behandlungsvorrichtung eingespart werden können.

Vorteilhaft können die Förderstufe und erste Trennstufe zusammen eine erste Längserstreckung, insbesondere Länge, des ersten Moduls einnehmen. Dies erlaubt eine bauraumoptimierte Anordnung der Komponenten.

Vorzugsweise können im ersten Modul zwischen der Förderstufe und der ersten Trennstufe ein oder mehrere Pumpmodule und/oder ein oder mehrere Sammelbehälter angeordnet sein, so dass Bauraum im Modul weiter genutzt werden kann. Insbesondere kann eine Einfüllanordnung der Förderstufe, insbesondere ein Einfülltrichter, eine zweite Längserstreckung, insbesondere Breite, des ersten Moduls einnehmen. Die Bauraumnutzung des Moduls kann weiter optimiert werden.

Nach einer günstigen Ausgestaltung kann die zweite Trennstufe in ein zweites Modul integriert sein. Das Modul kann ein stationäres Modul sein, oder kann insbesondere als Transportmodul für den Straßentransport ausgebildet sein, insbesondere als Transportcontainer oder Ladeplattform. Bei einem stationär aufgestellten Modul können beispielsweise Durchsatzleitungen nach oben verschoben werden, während bei einem mobilen Modul der Bauraum limitiert ist.

Bei einer mobilen Granulatbehandlungsvorrichtung können die benötigten Komponenten kompakt transportiert werden. Insbesondere kann die dritte Trennstufe im zweiten Modul integriert sein. Alternativ kann vorgesehen sein, dass die dritte Trennstufe in ein drittes Modul integriert sein kann. Das Modul kann ein stationäres Modul sein, oder kann insbesondere als Transportmodul für den Straßentransport ausgebildet sein, insbesondere als Transportcontainer oder Ladeplattform. Bei einem stationär aufgestellten Modul können beispielsweise Durchsatzleitungen nach oben verschoben werden, während bei einem mobilen Modul der Bauraum limitiert ist.

Nach einem weiteren Aspekt der Erfindung wird ein Verfahren zum Betreiben einer Granulatbehandlungsvorrichtung vorgeschlagen, die zur Behandlung insbesondere von Granulat aus Glas und/oder aus Keramik dient, mit den Schritten
(i) nassmechanisches Behandeln des Granulats zur Abtrennung von an den Feststoffpartikeln anhaftenden Verunreinigungen und Erzeugen eines Granulat-Flüssigkeitsgemischs in einer ersten Trennstufe;
(ii) Flüssig-Fest-Trennung des Granulat-Flüssigkeitsgemischs in einer zweiten Trennstufe, wobei eine an Granulat verarmte Flüssigphase und eine an gereinigtem Granulat reiche Phase erzeugt werden,
(iii) wenigstens teilweises Trennen von Flüssigkeit und gereinigtem Granulat in einer dritten Trennstufe.

Es kann zuverlässig Granulat so weitgehend von anhaftenden, insbesondere organischen Verunreinigungen getrennt werden, dass dieses für eine Wiederverwertung beispielsweise bei der Glasherstellung im Falle von Glasgranulat geeignet ist. Die erste Trennstufe dient vorteilhaft einer nassmechanischen Behandlung des rohen Granulats. Eine Zugabe eines oberflächenaktiven Agens ist nicht notwendig.

Nach einer günstigen Ausgestaltung kann die erste Trennstufe Agglomerate von Granulat und daran anhaftenden Anhaftungen aufbrechen. Insbesondere kann die erste Trennstufe abhängig von einem Drehmoment und/oder einer Stromaufnahme wenigstens eines Rührwerks der ersten Trennstufe betrieben werden. Vorteilhaft kann eine Zugabe von Flüssigkeit, insbesondere Wasser, in der ersten Trennstufe abhängig von einem Drehmoment und/oder einer Stromaufnahme des wenigstens einen Rührwerks der ersten Trennstufe erfolgen. Die Pumpfähigkeit des Granulat-Flüssigkeitsgemischs kann über Drehmoment und/oder Stromaufnahme erfasst und bei Bedarf geändert werden.

Nach einer günstigen Ausgestaltung kann die dritte Trennstufe abhängig von wenigstens einem Materialvorschub an gereinigtem Granulat von der zweiten zur dritten Trennstufe und/oder einer Menge und/oder eines Drucks einer Flüssigkeit in der zweiten und/oder dritten Trennstufe und/oder einer Amplitude und/oder einer Frequenz einer Siebeinrichtung in der dritten Trennstufe betrieben werden. Ein kontinuierlicher Prozessverlauf kann durch die Abstimmung der Komponenten aufeinander gewährleistet werden.

Nach einem weiteren Aspekt der Erfindung wird ein mobiles System mit einer Granulatbehandlungsvorrichtung vorgeschlagen, welche ein erstes Modul umfassend wenigstens eine erste Trennstufe, ein zweites Modul umfassend wenigstens eine zweite Trennstufe und ein drittes Modul umfassend wenigstens eine dritte Trennstufe aufweist, wobei wenigstens eines der Module als für den Straßentransport ausgebildetes Transportmodul ausgebildet ist.

Dadurch, dass die Granulatbehandlungsvorrichtung mobil eingesetzt werden kann, sind vor Ort bei den Nutzern keine Investitionen oder Umbauten für eine Granulatbehandlungsvorrichtung notwendig.

Nach einer günstigen Ausgestaltung kann das erste Modul als Transportmodul ausgebildet sein, wobei die erste Trennstufe mit einem Gesamtvolumen von etwa 1000 Litern ausgelegt sein kann, und/oder wobei die erste Trennstufe mit ihrem Ausgang nahe einer maximal verfügbaren Transporthöhe des Transportmoduls angeordnet ist. Dies erlaubt ein Austragen des Granulats im freien Gefälle unter Ausnutzung der Schwerkraft. Ein zusätzlicher Antrieb ist nicht notwendig. Alternativ oder zusätzlich kann das zweite Modul als Transportmodul ausgebildet sein, wobei die zweite Trennstufe für einen Zulauf aus der ersten Trennstufe von etwa 12 t/h und für einen Granulat-Austrag am Ausgang von etwa 4 t/h ausgelegt sein kann. Alternativ oder zusätzlich kann das dritte Modul als Transportmodul ausgebildet sein. Es kann eine vorteilhaft mobile Granulatbehandlungsvorrichtung bereitgestellt werden, welche ohne weiteres für den Straßentransport geeignet ist, was die Betriebskosten der Vorrichtung reduziert.

Die mobile Granulatbehandlungsvorrichtung erlaubt es, Granulat in unterschiedlichsten Ausgangszuständen mit praktisch gleichem Endergebnis an gereinigtem Granulat zu behandeln und dieses als werthaltiges Produkt zurückzugewinnen. Vorteilhaft wird die Aufteilung der Vorrichtung in aufeinander folgende Trennstufen dazu genutzt, die Vorrichtung modular zu gestalten. Die modulare Gestaltung erlaubt eine bauraumgünstige Anordnung der Komponenten der Granulatbehandlungsvorrichtung. Ebenso ist eine Standardisierung der Komponenten der Module möglich. Module können einfach ersetzt oder zur Reparatur ausgetauscht werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Blockdiagramm einer mehrstufigen Granulatbehandlungsvorrichtung nach einem Ausführungsbeispiel der Erfindung;
- Fig. 2: eine schematische Darstellung einer ersten Trennstufe in Form einer Attritionszelle nach einem Ausführungsbeispiel der Erfindung, welche in einem Modul angeordnet ist;
- Fig. 3: eine schematische Darstellung mit einer zweiten Trennstufe in Form eines Aufstromklassierers und einer integrierten dritten Trennstufe in Form einer Siebeinrichtung nach einem Ausführungsbeispiel der Erfindung, welche in einem Modul angeordnet sind;
- Fig. 4: eine schematische Darstellung eines dritten Moduls mit einer dritten Trennstufe in Form einer Siebeinrichtung;
- Fig. 5-7: in Draufsicht bauraumoptimierte Anordnungen der Förderstufe und Trennstufen;
- Fig. 8: ein Flussdiagramm eines Verfahrens zum Betreiben einer Granulatbehandlungsvorrichtung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

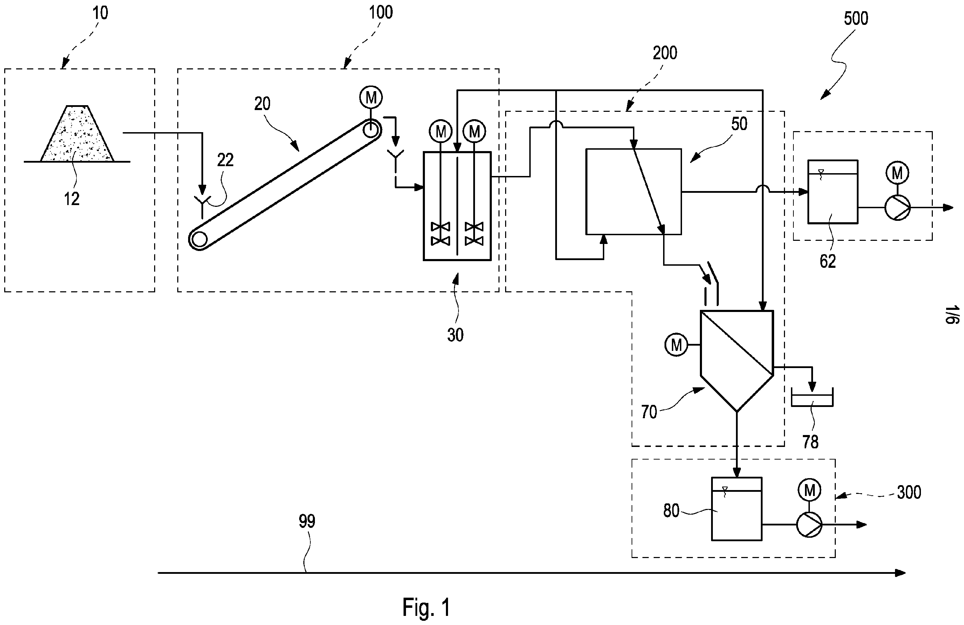

Figur 1 zeigt schematisch zur Erläuterung ein Ausführungsbeispiel der Erfindung mit einer aus mehreren Modulen 100, 200 aufgebauten Granulatbehandlungsvorrichtung 500 an einem Einsatzort 10. Typischerweise kann am Einsatzort 10 mehr oder weniger trockenes, nicht pumpfähiger rohes Granulat als Haufwerk 12 gelagert sein. Das Granulat ist vorzugsweise Glasgranulat oder Keramikgranulat und weist beispielsweise eine mittlere Korngröße von 5 mm auf.

Bei dem Granulat kann es sich um die Überreste der Altglasaufbereitung handeln, nachdem verwertbare Glasanteile abgetrennt sind. Das Granulat ist mit undefinierten Mengen an organischen Verunreinigungen wie beispielsweise Papier und Leim versetzt, die an den Granulatpartikeln angelagert sind.

Die Granulatbehandlungsvorrichtung 500 ist mehrstufig aufgebaut und umfasst drei Trennstufen 30, 50, 70, die aufeinander folgend entlang einer Prozessrichtung 99 angeordnet sind. Die erste Trennstufe 30 ist zur Abtrennung wenigstens eines Teils von an Granulat anhaftenden organischen Verunreinigungen vorgesehen und kann insbesondere als Attritionszelle ausgebildet sein. In der ersten Trennstufe wird das stark agglomerierte Granulat mit Flüssigkeit, vorzugsweise Wasser, versetzt und ein pumpfähiges Gemisch aus Granulat und Flüssigkeit gebildet. Durch die nassmechanische Behandlung in der ersten Trennstufe 30 werden die Agglomerate zerschlagen, so dass im Gemisch Granulatpartikel, organische Partikel, beispielsweise im Wesentlichen Papierschlamm, und Flüssigkeit vorliegen.

Die zweite Trennstufe 50 ist zur wenigstens überwiegenden Trennung des in der ersten Trennstufe 30 behandelten Granulats von den organischen Verunreinigungen vorgesehen. Die dritte Trennstufe 70 ist zur teilweisen Entwässerung des in der zweiten Trennstufe 50 gereinigten Granulats vorgesehen. Optional kann an die dritte Trennstufe 70 noch eine Entwässerungsstufe für das verunreinigte Abwasser angeschlossen sein, etwa eine Kammerfilterpresse oder eine Zentrifuge. Beim Entwässern des verunreinigten Abwassers entsteht Papierschlamm und Filtrat. Der Papierschlamm kann thermisch entsorgt werden, während das Filtrat in eine Kläranlage entsorgt werden kann. Das Granulat ist am Ende der Prozessstrecke durch die Trennstufen 30, 50, 70 soweit von organischen Verunreinigungen befreit, dass eine Wiederverwertung auch unter ökonomischen Gesichtspunkten mit ausreichender Qualität, beispielsweise in der Glasherstellung, möglich ist.

Die Granulatbehandlungsvorrichtung 500 kann am Einsatzort 10 stationär angeordnet sein oder als mobile Granulatbehandlungsvorrichtung 500 vorgesehen sein, die den Einsatzort wechseln kann.

In Prozessrichtung 99 vor der ersten Trennstufe 30 ist eine Förderstufe 20 angeordnet, die zum Fördern des in der ersten Trennstufe 30 zu behandelnden Granulats zur ersten Trennstufe 30 vorgesehen ist. Die Förderstufe 20 kann beispielsweise als Tragkettenförderer oder Wellkantengurtförderer ausgebildet sein. Die Förderstufe 20 weist eine Einfüllanordnung 22 auf, die insbesondere als Einfülltrichter ausgebildet ist.

Das rohe Granulat wird mit einem Radlader oder Bagger oder dergleichen zur Förderstufe 20 gefördert. Die Einfüllanordnung 22 wird von Zeit zu Zeit befüllt und bildet einen Vorratsraum, der langsam entleert wird, während die Förderstufe 20 das rohe Granulat kontinuierlich zur ersten Trennstufe 30 transportieren kann.

Die Trennstufen 30, 50, 70 der Granulatbehandlungsvorrichtung 500 sind in den Modulen 100, 200, 300 angeordnet, die, bei einer mobilen Granulatbehandlungsvorrichtung 500, bei Bedarf an den Einsatzort 10 gefahren werden. Das erste Transportmodul 100 kann vorzugsweise als LKW-Auflieger oder Ladeplattform ausgebildet sein, in denen die zugehörigen Komponenten der Granulatbehandlungsvorrichtung 500 bauraumoptimiert in Breite, Länge und Höhe angeordnet sind.

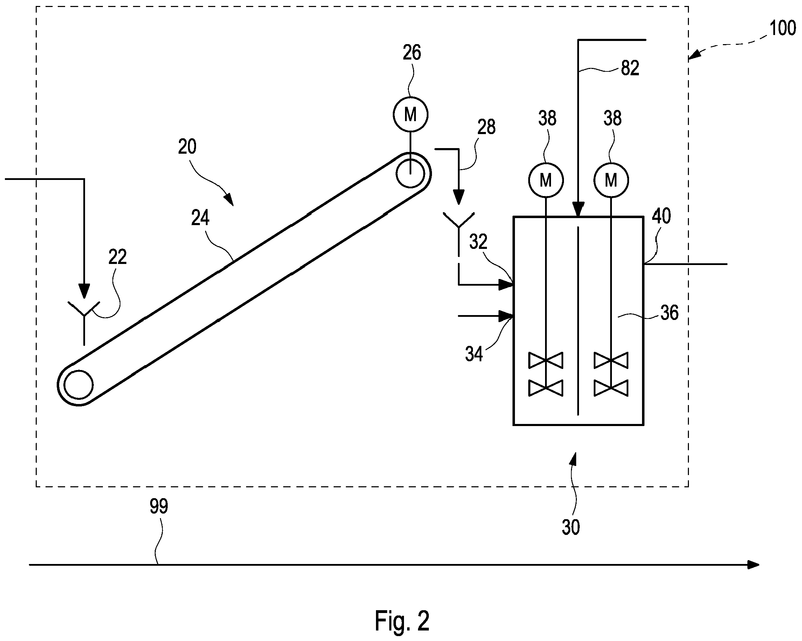

Die zweite Trennstufe 50 ist in ein zweites Modul 200 integriert. In das zweite Modul 200 ist in diesem Ausführungsbeispiel neben der zweiten Trennstufe 50 auch die dritte Trennstufe 70 integriert. Die Trennstufen 30, 50, 70 können mit einer Flüssigkeitszufuhr 82 (Figur 2) mit Wasser, insbesondere Frischwasser, versorgt werden.

Die Förderstufe 20 und die erste Trennstufe 30 sind vorzugsweise in dem ersten Modul 100 integriert. Die Einfüllanordnung 22 in Form des Einfülltrichters nimmt eine Breite des ersten 100 ein, während die Länge des ersten Moduls 100 von der Förderstufe 20 und der darauffolgenden ersten Trennstufe 30 eingenommen werden. Vorzugsweise ist unterhalb der Einfüllanordnung 22 ein Vorratsraum vorgesehen, aus dem das Granulat kontinuierlich zur ersten Trennstufe 30 transportiert wird.

In der ersten Trennstufe 30 wird das Granulat nassmechanisch behandelt und in einen fließfähigen Zustand gebracht, indem Flüssigkeit, insbesondere Wasser, über eine Zuführung der Wasserzufuhr 82 zugegeben wird und die Füllung der ersten Trennstufe 30 mechanisch bearbeitet wird, so dass sich anhaftende Verunreinigungen von den Granulatpartikeln lösen.

Die zweite Trennstufe 50 ist in Prozessrichtung 99 nach der ersten Trennstufe 30 angeordnet und ist vorteilhaft als Aufstromklassierer ausgebildet, in dem das Gemisch aus Granulat, Verunreinigungen und Flüssigkeit im Gegenstrom in eine granulatreiche Phase, die praktisch frei von abgelösten Verunreinigungen ist und eine granulatarme Phase, die reich an abgelösten Verunreinigungen ist, aufgetrennt wird.

Das in der ersten Trennstufe 30 behandelte Granulat wird im oberen Bereich in die zweite Trennstufe 50 geleitet, während Flüssigkeit, insbesondere Wasser, von unten mit einer definierten Strömungsgeschwindigkeit eingelassen wird. Die abgelösten Verunreinigungen werden nach oben geschwemmt, während sich die Granulatpartikel als Sediment im unteren Bereich des Aufstromklassierers sammeln und zur dritten Trennstufe 70 geleitet werden.

Die Verunreinigungen können aus dem oberen Bereich der zweiten Trennstufe 50 entfernt werden und beispielsweise in einer Stufe 62 entwässert werden und anschließend gegebenenfalls verbrannt werden.

Das gereinigte Granulat gelangt als Grobgutaustrag an das Ende der zweiten Trennstufe 50 und wird von dort in die dritte Trennstufe 70 geleitet. In der dritten Trennstufe 70, die eine Siebeinrichtung enthält, wird das gereinigte Granulat zur Feinreinigung nochmals über eine Zuführung der Wasserzufuhr 82 mit Wasser gespült und in der Siebeinrichtung entwässert. Das gereinigte Granulat wird in einem Sammelbehälter 78 aufgefangen, während das Abwasser in einem Sammelbehälter 80 aufgefangen und beispielsweise in den verschiedenen Reinigungsschritten des Granulats wiederverwendet oder der Kläranlage zugeführt werden kann. Optional können etwaige feinkörnige Feststoffpartikel des Granulats, die mit dem Abwasser durch die Siebeinrichtung der dritten Trennstufe 70 in den Sammelbehälter 80 gelangt sind, mechanisch aus dem Abwasser abgetrennt werden (nicht dargestellt) und weiterverwendet werden.

Am Ende der Prozessstrecke ist das Granulat von organischen Verunreinigungen befreit und kann als werthaltiges Produkt dem Glasherstellungsprozess wieder zugeführt werden.

Mit besonderem Vorteil ist die Granulatbehandlungsvorrichtung 500 auf einem oder mehreren LKW-Aufliegern mit Auflieger-Standardmaßen angeordnet und kann per Straßentransport an den gewünschten Einsatzort 10 transportiert werden.

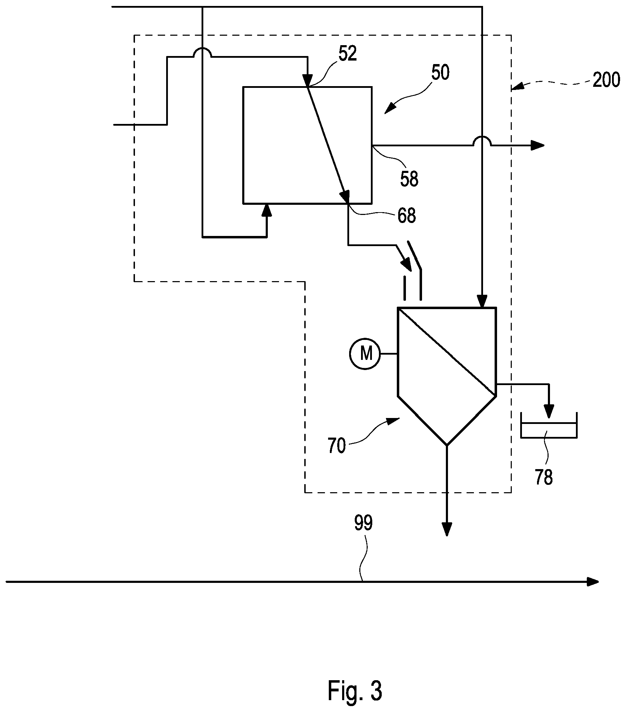

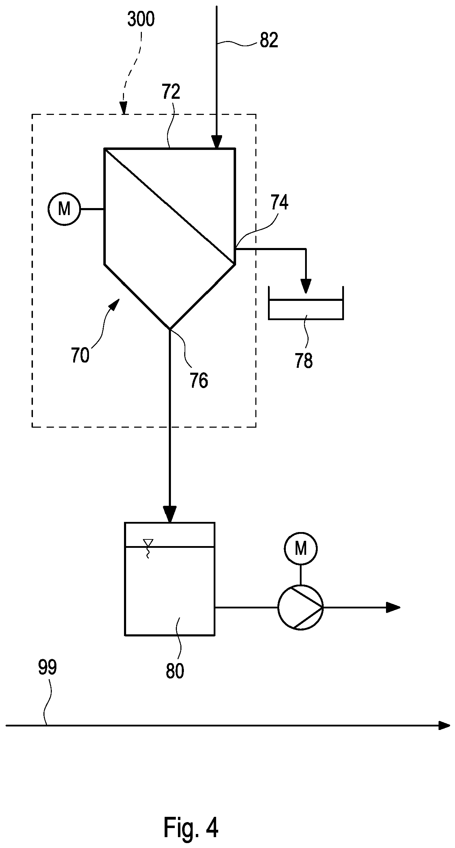

Die Figuren 2 bis 4 zeigen einzelne Komponenten und Trennstufen 30, 50, 70 der Granulatbehandlungsvorrichtung 500 in detaillierter Form. Dabei zeigt Figur 2 eine schematische Darstellung eines ersten Moduls 100, vorzugsweise eines Transportmoduls 100, mit einer Förderstufe 20 und einer ersten Trennstufe 30 in Form einer Attritionszelle, Figur 3 eine schematische Darstellung eines zweiten Moduls 200 mit einer zweiten Trennstufe 50 in Form eines schematisch dargestellten Aufstromklassierers und einer dritten Trennstufe 70 in Form einer Siebeinrichtung. Figur 4 zeigt alternativ eine schematische Darstellung eines separaten dritten Moduls 300, insbesondere Transportmoduls 300 mit der dritten Trennstufe 70 in Form einer Siebeinrichtung.

Im ersten Transportmodul 100, wie in Figur 2 dargestellt ist, sind die Förderstufe 20 und die erste Trennstufe 30 integriert. Das nicht pumpfähige Granulat gelangt über die Förderstufe 20 zur ersten Trennstufe 30. Das Granulat wird in eine als Einfülltrichter ausgebildete Einfüllanordnung 22 gefüllt, der die Breite des Transportmoduls 100 ausfüllt, gelangt auf eine Förderbahn 24, die mit einem regelbaren Motor 26 betrieben ist und wird am Ausgang 28 in einen Eingang 32 der zweiten Trennstufe 50 geleitet. Unter der Einfüllanordnung 22 kann sich ein Vorrat an rohem Granulat bilden, das kontinuierlich mit der Förderbahn 24 zum Ausgang 28 transportiert wird.

Hierfür ist bei der Auslegung des Transportmoduls 100 für LKW-Auflieger zwischen Anfang und Ende der Förderbahn 24 ein Höhenunterschied von etwa 1,5 m zu überwinden, wofür besonders Trogkettenförderer oder Wellkantengurtförderer geeignet sind. Eine günstige Fördermenge liegt bei etwa 3 m³/h Feststoff, entsprechend etwa 7 t/h Feststoff.

Die erste Trennstufe 30 ist vorzugsweise als ein- oder mehrstufige Attritionszelle 36 ausgebildet. Das mit Anhaftungen, beispielsweise Papierresten, verunreinigte Granulat wird in der Attritionszelle 36 desagglomeriert. Das Agglomerat löst sich auf, wodurch die anhaftenden Verunreinigungen freigelegt werden. In der Attritionszelle 36 wird das rohe Granulat mit Flüssigkeit, insbesondere Frischwasser, vermischt und durch intensives Rühren homogenisiert. Der Prozess der Attrition wird vorteilhaft zur Reinigung von Stoffen verwendet, die mit adsorbierten und angelagerten Fremdstoffen verunreinigt sind. Die Attritionszelle 36 besteht z.B. aus zwei Zellen, in denen jeweils ein Rührorgan angeordnet ist, das jeweils von einem regelbaren Motor 38 antreibbar ist.

Für den Einsatz im Transportmodul 100 als LKW-Auflieger ist die Attritionszelle 36 mit einem Gesamtvolumen von etwa 1000 Litern ausgelegt. Jedes Rührgerät hat eine Antriebsleistung von etwa 18,5 kW je Rührorgan. Die Attritionszelle 36 ist vorzugsweise aus Stahl mit entsprechender Gummierung als Verschleißschutz gefertigt.

Die Attritionszelle 36 ist zweckmäßigerweise mit einem Drehmomentsensor ausgestattet, um die Feststoffkonzentration in der Attritionszelle 36 zu steuern oder zu regeln. Nimmt das Drehmoment zu, wird entsprechend die Fördermenge an Granulat reduziert, indem der frequenzgesteuerte Antriebsmotor 26 der Förderstufe 20 seine Leistung verringert.

Die Attritionszelle 36 ist ferner mit einem Regelventil für die Zugabe der Flüssigkeitsmenge ausgestattet. Flüssigkeit, insbesondere Wasser, wird von einer Flüssigkeitsversorgung 82 eingebracht mit etwa 5 m³/h bei Zugabe von 3 m³/h Feststoff aus rohem Granulat oder 8 m³/h pumpfähigem Granulat.

Nach hinreichender Attrition gelangt das behandelte Granulat über einen Ausgang 40 in Form eines Überlaufs in das Modul 200 mit der zweiten Trennstufe 50, die vorzugsweise einen Aufstromklassierer aufweist sowie die dritte Trennstufe 70 in Form einer Siebeinrichtung.

Der Austrag aus der Attritionszelle 36 in Richtung der zweiten Trennstufe 50 erfolgt nach Möglichkeit in freiem Gefälle. Hierfür sind die Höhenverhältnisse entsprechend angepasst. So kann die Attritionszelle 36 so hoch wie möglich im ersten Transportmodul 100 angeordnet sein, ohne die maximale Transporthöhe im ersten Transportmodul 100, entsprechend der maximal verfügbaren Transporthöhe auf dem LKW zu überschreiten.

Das in der ersten Trennstufe 30 homogenisierte Granulat fließt, nach Möglichkeit im freien Gefälle, über den Eingang 52 in den Aufstromklassierer der zweiten Trennstufe 50, die in Figur 3 dargestellt ist.

In dem Aufstromklassierer werden die aufschwimmenden Verunreinigungen im Gegenstrom vom Granulat abgetrennt, wobei eine Flüssig-Fest-Trennung des Granulats erfolgt. Das Granulat sammelt sich als Sediment am tieferliegenden Ausgang 68 des Aufstromklassierers. Das abgereicherte Granulat gelangt, vorzugsweise im freien Gefälle, an den Eingang der dritten Trennstufe 70.

Die an Verunreinigungen angereicherte wässrige Phase läuft im eingangsnahen Teil des Aufstromklassierers über einen Ausgang 58 ab. Das Abwasser mit den abgelösten Verunreinigungen wird in einem Sammelbehälter 62 (Figur 1) gesammelt.

Die Granulatpartikel, die in Richtung des Ausgangs 68 transportiert werden, können beispielsweise eine Partikelgröße von mehr als 60 µm aufweisen. Kleinere Partikel werden im Abwasser ausgetragen. Es sind jedoch auch andere Partikelgrößen möglich.

Eine günstige Auslegung des Aufstromklassierers ist beispielsweise ein Zulauf an Granulat aus der Attritionszelle von ca. 8 m³/h, bzw. ca. 12 t/h. Der Zulauf an Flüssigkeit zur Gegenstrombehandlung im Aufstromklassierer liegt bei 1,7 m³/h. Der Ablauf an Abwasser liegt bei ca. 7,7 m³/h bzw. ca. 10 t/h. Je nach System können die Werte variieren.

Am Ausgang 68 werden etwa 2 m³/h bzw. 4 t/h an behandeltem Granulat-Grobgut ausgetragen.

Die Reinigungsleistung des Aufstromklassierers wird hauptsächlich über die Parameter Strömungsgeschwindigkeit der eingeleiteten Flüssigkeit und Förderstrom des Granulats in den Aufstromklassierer beeinflusst.

Das Modul 200 ist vorzugsweise in ein zweites Transportmodul 200 als LKW-Auflieger oder Anhänger integriert vorgesehen.

Das gereinigte Granulat gelangt über den Ausgang 68 in die dritte Trennstufe 70. Die dritte Trennstufe 70 kann in das zweite Modul 200 integriert sein, wie in Figur 3 dargestellt ist, oder auch als separates drittes Modul 300, insbesondere Transportmodul 300, ausgebildet sein (Figur 4), beispielsweise als Anhänger für einen LKW.

Das Granulat wird als Grobgut in einen Eingang 72 einer Siebeinrichtung der dritten Trennstufe 70 transportiert, dort durch Besprühen mit Wasser aus der Wasserversorgung 82 nochmals gereinigt und anschließend entwässert.

Die Siebeinrichtung ist vorzugsweise ein Schwingsieb mit angepasstem Siebtrennschnitt. Das Wasser wird über eine über der Siebeinrichtung angeordnete Düsenlanze eingebracht und reinigt das gereinigte Granulat weiter, wobei dieses gleichzeitig entwässert wird.

Die Reinigungsleistung des Schwingsiebs der dritten Trennstufe 70 wird hauptsächlich über die Parameter Vorschub, Schichtdicke des Gutstroms, Amplitude des Schwingsiebs, Frequenz des Schwingsiebs, die Menge des zugeführten Wassers sowie den Druck des zugeführten Wassers beeinflusst. Zum Antrieb des Schwingsiebs ist ein regelbarer Motor vorgesehen.

An die dritte Trennstufe 70 kann optional eine nicht dargestellte Entwässerungsstufe für das verunreinigte Abwasser angeschlossen werden, die insbesondere eine Kammerfilterpresse und/oder eine Zentrifuge umfasst. Beim Entwässern des verunreinigten Abwassers entsteht Papierschlamm und Filtrat. Der Papierschlamm kann thermisch entsorgt werden, während das Filtrat in eine Kläranlage entsorgt werden kann

Das Abwasser aus der Siebeinrichtung wird über einen Ausgang 76 in einem Sammelbehälter 80 aufgefangen und zur Kläranlage am Einsatzort 10 abgeleitet. Das gereinigte Granulat wird über einen Ausgang 74 aus der dritten Trennstufe 70 ausgeleitet und in einem Sammelbehälter 78 aufgefangen und steht zur Wiederverwertung zur Verfügung.

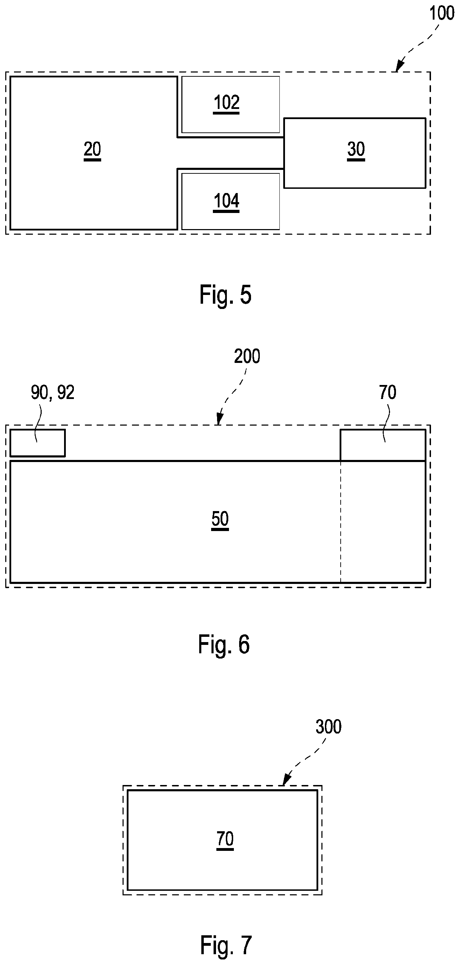

Die Figuren 5-7 zeigen Blockdiagramme von bauraumoptimierten Anordnungen der Förderstufe 20 und Trennstufen 30, 70, 50 in ihren jeweiligen modularen Zusammenstellungen. Die Transportmodule 100, 200, 300 sind für den Straßentransport ausgebildet, insbesondere als LKW-Auflieger, Ladeplattform oder Anhänger.

Im ersten Transportmodul 100 (Figur 5) sind die Förderstufe 20 und die erste Trennstufe 30 integriert. Die Förderstufe 20 und die erste Trennstufe 30 nehmen die erste Längserstreckung, insbesondere die Länge, des Transportmoduls 100 ein, wobei die Förderstufe 20 die zweite Längserstreckung quer zur ersten Längserstreckung, insbesondere die Breite, des Transportmoduls 100 ausfüllt. Zwischen der Förderstufe 20 und der ersten Trennstufe 30 ist beidseits der Förderbahn der Förderstufe 20 jeweils ein Bereich 102, 104 zur Aufnahme von ein oder mehreren Pumpmodulen und ein oder mehreren Sammelbehältern angeordnet. Die Pumpmodule können beispielsweise diejenigen der Förderstufe 20 und der ersten Trennstufe 30 sein.

Das zweite Modul 200 (Figur 6) mit der zweiten Trennstufe 50 und der dritten Trennstufe 70 ist von den Abmessungen gleich wie das erste Transportmodul 100. In dem zweiten Modul 200 ist ein Schaltschrank 90 angeordnet, welcher eine Steuer- und/oder Regeleinheit 92 zum Betreiben von einer oder mehreren der Trennstufen 30, 50, 70 und/oder der Förderstufe 20 umfasst.

Optional kann die dritte Trennstufe 70 mit der Siebeinrichtung als Transportmodul 300 (Figur 7) in Form eines Anhängers ausgebildet sein. Zum Transport kann dieses Transportmodul 300 an das erste Transportmodul 100 gekoppelt werden oder mit einem anderen Fahrzeug zum Einsatzort verbracht werden.

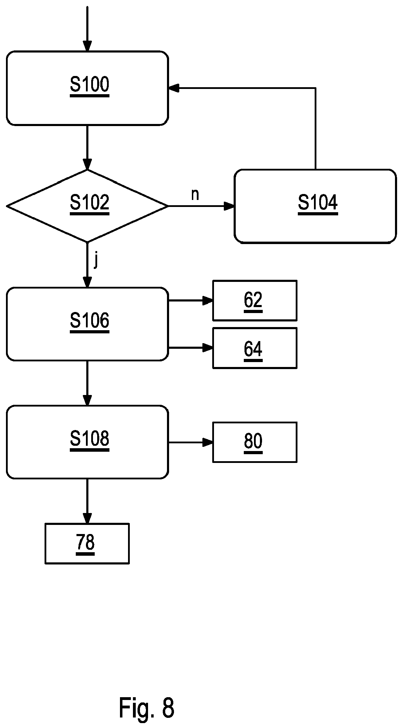

Figur 8 zeigt ein Flussdiagramm eines Verfahrens zum Betreiben einer Granulatbehandlungsvorrichtung 500. Zunächst wird die Granulatbehandlungsvorrichtung 500 beispielsweise mit einem LKW an ihren Einsatzort transportiert und die Transportmodule bzw. Module 100, 200 und ein gegebenenfalls vorhandenes Modul 300 aufgestellt.

Im ersten Schritt S100 wird das rohe Granulat in die erste Trennstufe 30 (Figur 1) geleitet. In der ersten Trennstufe 30 (Figur 1) werden am Granulat anhaftende Verunreinigungen mechanisch abgetrennt und ein homogenes fließfähiges Gemisch aus Granulat und Flüssigkeit erzeugt.

In Schritt S102 wird geprüft, ob das Granulat ausreichend fließfähig ist. Ist dies nicht der Fall ("n" in dem Flussdiagramm), werden in Schritt 104 Maßnahmen getroffen, um das Granulat ausreichend fließfähig zu machen, indem beispielsweise eine gewisse Menge Flüssigkeit, insbesondere Wasser, in die erste Trennstufe 30 zugegeben wird und/oder die Zufuhr von rohem Granulat in die erste Trennstufe 30 angepasst wird. Ein Maß für den Zustand des Granulats ist beispielsweise das Drehmoment des Rührwerks in einer Attritionszelle der ersten Trennstufe und/oder die Stromaufnahme des Antriebs des Rührwerks.

Ist das Granulat ausreichend fließfähig ("j" in dem Flussdiagramm), wird das behandelte Granulat in die zweite Trennstufe 50 (Figur 1) geleitet, und es erfolgt in Schritt S106 eine Flüssig-Fest-Trennung mit weiterer Reinigung des Granulats mittels eines Aufstromklassierers. In der zweiten Trennstufe 50 werden durch Zugabe von Flüssigkeit, insbesondere Wasser, abgelöste Verunreinigungen vom Granulat im Gegenstromverfahren in der zweiten Trennstufe 50 abgetrennt. Abwasser mit den Verunreinigungen wird in einem Sammelbehälter 62 aufgefangen, während das Granulat zur dritten Trennstufe 70 weiterbefördert wird.

Das Granulat wird in Schritt S108 in der dritten Trennstufe 70 in einer Siebeinrichtung gespült, um noch anhaftende restliche Verunreinigungen vom Granulat abzuspülen und dieses als gereinigtes Produkt in einen Sammelbehälter 78 auszubringen. Gegebenenfalls können Partikel des Granulats, die im Abwasser enthalten sind, mechanisch aus diesem entfernt und dem gereinigten Produkt zugegeben werden. Optional kann die Trennstufe 70 auch mehrstufig ausgebildet sein, um auch kleinkörnigeren Granulat aufzufangen.

## Patentansprüche

1. Mehrstufige Granulatbehandlungsvorrichtung (500) zur Behandlung von insbesondere Granulat aus Glas und/oder aus Keramik, umfassend
eine erste Trennstufe (30) zur Abtrennung und/oder zum Aufbrechen wenigstens eines Teils von an Partikeln des Granulats anhaftenden Verunreinigungen, insbesondere organischen und/oder metallischen Verunreinigungen,
eine in Prozessrichtung (99) folgende zweite Trennstufe (50) zur wenigstens überwiegenden Trennung des in der ersten Trennstufe (30) behandelten Granulats von den in der ersten Trennstufe (30) abgetrennten Verunreinigungen, sowie
eine in Prozessrichtung (99) auf die zweite Trennstufe (50) folgende dritte Trennstufe (70) zur wenigstens teilweisen Entfernung von Flüssigkeit des in der zweiten Trennstufe (50) gereinigten Granulats.

2. Granulatbehandlungsvorrichtung nach Anspruch 1, wobei in Prozessrichtung (99) vor der ersten Trennstufe (30) eine Förderstufe (20) angeordnet ist, die zum Fördern des in der ersten Trennstufe (30) zu behandelnden Granulats zur ersten Trennstufe (30) vorgesehen ist,

3. Granulatbehandlungsvorrichtung nach Anspruch 1 oder 2, wobei die erste Trennstufe (30) wenigstens ein Rührwerk aufweist und insbesondere abhängig von einem Drehmoment und/oder einer Stromaufnahme des Rührwerks betreibbar ist.

4. Granulatbehandlungsvorrichtung nach einem der vorhergehenden Ansprüche, wobei die zweite Trennstufe (50) abhängig von einem Materialstrom an Granulat in die zweite Trennstufe (50) und/oder einer Strömungsgeschwindigkeit der Flüssigkeit in der zweiten Trennstufe (50) betreibbar ist.

5. Granulatbehandlungsvorrichtung nach einem der vorhergehenden Ansprüche, wobei die dritte Trennstufe (70) wenigstens abhängig von einem Materialvorschub an Granulat von der zweiten zur dritten Trennstufe (70) und/oder einer Strömungsgeschwindigkeit und/oder Menge und/oder eines Drucks einer Flüssigkeit in der zweiten und/oder dritten Trennstufe (50, 70) und/oder einer Amplitude und/oder einer Frequenz einer Siebeinrichtung in der dritten Trennstufe (70) betreibbar ist.

6. Granulatbehandlungsvorrichtung nach einem der vorhergehenden Ansprüche, wobei eine Zufuhreinrichtung (82) vorgesehen ist, mit der Flüssigkeit, insbesondere Wasser, in die erste Trennstufe (30) zuführbar und ein pumpfähiges Granulat-Flüssigkeitsgemisch, insbesondere mit einer definierten Obergrenze an Feststoffgehalt, herstellbar ist.

7. Granulatbehandlungsvorrichtung nach einem der vorhergehenden Ansprüche, wobei die erste Trennstufe (30) eine Einrichtung zur nassmechanischen Behandlung des Granulats, insbesondere eine Attritionszelle, umfasst.

8. Granulatbehandlungsvorrichtung nach einem der vorhergehenden Ansprüche, wobei die zweite Trennstufe (50) einen Aufstromklassierer umfasst, insbesondere wobei ein Ausgang (64) des Aufstromklassierers für das gereinigte Granulat oberhalb eines Eingangs (72) der dritten Trennstufe (70) angeordnet ist.

9. Granulatbehandlungsvorrichtung nach einem der vorhergehenden Ansprüche, wobei die dritte Trennstufe (70) eine Siebeinrichtung, insbesondere ein Schwingsieb, umfasst.

10. Granulatbehandlungsvorrichtung nach einem der vorhergehenden Ansprüche, wobei eine Steuer- und/oder Regeleinheit (92) zum Betreiben von einer oder mehreren der Trennstufen (30, 50, 70) und/oder einer stromauf der ersten Trennstufe (30) angeordneten Förderstufe (20) vorgesehen ist.

11. Granulatbehandlungsvorrichtung nach einem der vorhergehenden Ansprüche, wobei zur Aufnahme wenigstens der Trennstufen (30, 50, 70) mehrere Module (100, 200, 300) vorgesehen sind, wobei insbesondere eine der ersten Trennstufe (30) stromauf vorgelagerte Förderstufe (20) und die erste Trennstufe (30) in einem Modul (100) angeordnet sind, das vorzugsweise für den Straßentransport ausgebildet ist, insbesondere als Transportcontainer oder Ladeplattform,
wobei insbesondere Förderstufe (20) und erste Trennstufe (30) zusammen eine erste Längserstreckung, insbesondere Länge, des ersten Moduls (100) einnehmen,
wobei vorzugsweise im ersten Modul (100) zwischen der Förderstufe (20) und der ersten Trennstufe (30) ein oder mehrere Pumpmodule (26, 38) und/oder ein oder mehrere Sammelbehälter (62, 64) angeordnet sind.

12. Granulatbehandlungsvorrichtung nach Anspruch 11, wobei eine Einfüllanordnung (22) der Förderstufe (20), insbesondere ein Einfülltrichter, eine zweite Längserstreckung, insbesondere Breite, des ersten Moduls (100) einnimmt.

13. Granulatbehandlungsvorrichtung nach einem der vorhergehenden Ansprüche, wobei die zweite Trennstufe (50) in ein zweites Modul (200) integriert ist, insbesondere wobei das zweite Modul (200) als Transportmodul (200) für den Straßentransport ausgebildet ist, insbesondere als Transportcontainer oder Ladeplattform.

14. Granulatbehandlungsvorrichtung nach Anspruch 13, wobei die dritte Trennstufe (70) im zweiten Modul (200) integriert ist, oder
wobei die dritte Trennstufe (70) in ein drittes Modul (300) integriert ist, insbesondere wobei das dritte Modul (300) als Transportmodul (300) für den Straßentransport ausgebildet ist, insbesondere als Transportcontainer oder Ladeplattform.

15. Verfahren zum Betreiben einer Granulatbehandlungsvorrichtung (500) insbesondere nach einem der vorhergehenden Ansprüche, zur Behandlung insbesondere von Granulat aus Glas und/oder aus Keramik, mit den Schritten
(i) nassmechanisches Behandeln des Granulats zur Abtrennung und/oder zum Aufbrechen von an den Feststoffpartikeln anhaftenden Verunreinigungen und Erzeugen eines Granulat-Flüssigkeitsgemischs in einer ersten Trennstufe (30);
(ii) Flüssig-Fest-Trennung des Granulat-Flüssigkeitsgemischs in einer zweiten Trennstufe (50), wobei eine an Granulat verarmte Flüssigphase und eine an gereinigtem Granulat reiche Phase erzeugt werden,
(iii) wenigstens teilweises Trennen von Flüssigkeit und gereinigtem Granulat in einer dritten Trennstufe (70).

16. Verfahren nach Anspruch 15, wobei die erste Trennstufe (30) abhängig von einem Drehmoment und/oder einer Stromaufnahme wenigstens eines Rührwerks der ersten Trennstufe (30) betrieben wird, wobei vorzugsweise eine Zugabe von Flüssigkeit, insbesondere Wasser, in der ersten Trennstufe (30) abhängig von einem Drehmoment und/oder einer Stromaufnahme wenigstens eines Rührwerks der ersten Trennstufe (30) erfolgt.

17. Verfahren nach einem der Ansprüche 15 bis 16, **dadurch gekennzeichnet, dass** die dritte Trennstufe (70) abhängig von wenigstens einem Materialvorschub an gereinigtem Granulat von der zweiten zur dritten Trennstufe (30) und/oder einer Menge und/oder eines Drucks einer Flüssigkeit in der zweiten und/oder dritten Trennstufe (50, 70) und/oder einer Amplitude und/oder einer Frequenz einer Siebeinrichtung in der dritten Trennstufe (70) betrieben wird.

18. Mobiles System mit einer Granulatbehandlungsvorrichtung (500) nach einem der Ansprüche 1 bis 14, welche ein erstes Modul (100) umfassend wenigstens eine erste Trennstufe (30), ein zweites Modul (200) umfassend wenigstens eine zweite Trennstufe (50) und ein drittes Modul (300) umfassend wenigstens eine dritte Trennstufe (70) aufweist, wobei wenigstens eines der Module (100, 200, 300) als für den Straßentransport ausgebildetes Transportmodul ausgebildet ist.

19. Mobiles System nach Anspruch 18, wobei das erste Modul (100) als Transportmodul (100) ausgebildet ist, wobei die erste Trennstufe (30) mit einem Gesamtvolumen von etwa 1000 Litern ausgelegt ist, und/oder wobei die erste Trennstufe (30) mit ihrem Ausgang (40) nahe einer maximal verfügbaren Transporthöhe des Transportmoduls (100) angeordnet ist;
und/oder wobei das zweite Modul (200) als Transportmodul (200) ausgebildet ist, wobei die zweite Trennstufe (50) für einen Zulauf aus der ersten Trennstufe (30) von etwa 12 t/h und für einen Granulat-Austrag am Ausgang (68) von etwa 4 t/h ausgelegt ist;
und/oder wobei das dritte Modul (300) als Transportmodul (300) ausgebildet ist.
